# DEMANDE DE BREVET EUROPEEN

(11) **EP 0 559 557 A1**
(43) Date de publication de la demande: **08.09.1993**
(21) Numéro de dépôt: 93400543.0
(22) Date de dépôt: 02.03.1993
(51) Int. Cl.: G01S 5/00

(54) **Système de radiolocalisation, en particulier pour trajectographie de ballons météorologiques**

(30) Priorité: 02.03.1992 FR 9202450
(71) Demandeur: SOCIETE NOUVELLE D'EQUIPEMENT DU CALVADOS, F-14740 Bretteville-L'Orgueilleuse (FR)
(72) Inventeur: Varieras, François Guy, F-14000 Caen (FR)
(74) Mandataire: Martin, Jean-Jacques

(57) **Abrégé**

La présente invention concerne un système de radiolocalisation comprenant des translateurs (300) embarqués sur des mobiles et au moins une station au sol conçue pour traiter les signaux translatés reçus en provenance des translateurs (300), caractérisé par le fait que les translateurs (300) comprennent un étage (310) de translation de fréquence piloté par un oscillateur local (308) et des moyens (310) conçus pour superposer au signal réémis par chaque translateur embarqué (310) un harmonique n de l'oscillateur local (308) utilisé.

## Description

La présente invention concerne le domaine de la radiolocalisation.

On a déjà proposé de nombreux systèmes conçus pour permettre une localisation de mobiles.

On a en particulier proposé un système de radiolocalisation dénommé GPS (correspondant aux initiales de l'expression anglaise Global Positioning System). Ce système GPS comprend plusieurs satellites suivant des orbites décalés à altitude constante, des systèmes translateurs de fréquence embarqués respectivement sur chaque mobile et des stations au sol exploitant les signaux émis par chaque translateur pour détecter la position du mobile correspondant.

Les translateurs embarqués exploitent généralement les signaux provenant de quatre satellites.

Ces signaux générés par les satellites comprennent notamment des signaux dits de navigation correspondant à un code, généralement un code dit de Gold, formés d'une suite binaire émise à des instants bien déterminés dont les éléments se succèdent de façon quasi-aléatoire.

Deux modes de fonctionnement existent : mode réception et mode translation ; c'est à ce dernier qu'on se réfère ci-après.

Les translateurs embarqués sur le mobile ont pour fonction essentielle de recevoir les signaux de navigation émis par les différents satellites et translater en fréquence ces signaux reçus avant de les retransmettre vers les stations au sol.

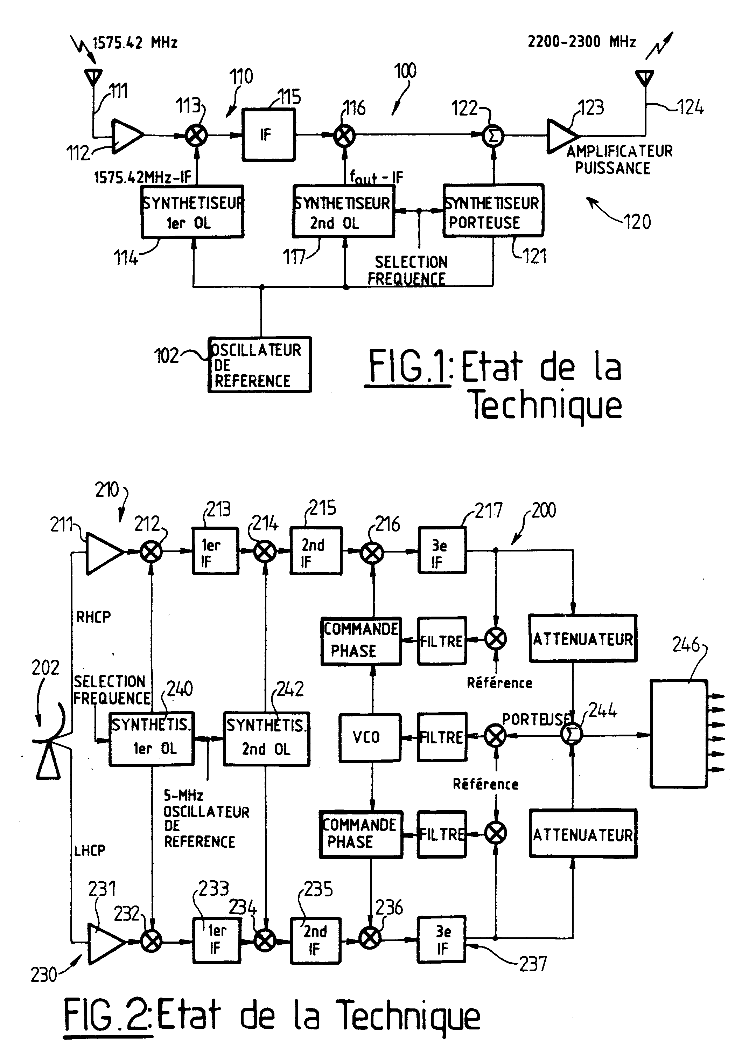

On a représenté sur la figure 1 annexée un ensemble de réalisation d'un translateur de fréquence embarqué 100 connu appartenant à l'état de la technique. Comme on le voit sur la figure 1, ces translateurs 100 comprennent deux parties principales 110, 120, servant respectivement de moyens de réception des signaux reçus des satellites, et de moyens de réémission en direction des stations au sol après translation de fréquence.

Chacun des moyens 110, 120 précités peut faire l'objet de nombreux modes de réalisation.

Généralement, les translateurs embarqués 100 sont commandés par un oscillateur de référence 102.

Les moyens 110 de réception comprennent typiquement :
- une antenne 111,
- un module amplificateur 112,
- un premier mélangeur 113 recevant le signal issu de l'amplificateur 112 et qui correspond au signal provenant des satellites
- un premier synthétiseur 114 piloté par l'oscillateur de référence 102 et dont le signal de sortie est également appliqué au premier mélangeur 113,
- un filtre de fréquence intermédiaire 115 relié à la sortie du premier mélangeur 113,
- un second mélangeur 116 recevant le signal issu du filtre 115, et
- un deuxième synthétiseur 117 piloté par l'oscillateur de référence 102 et dont le signal de sortie est également appliqué au second mélangeur 116.

Les moyens 120 d'émission comprennent typiquement :
- un troisième synthétiseur 121 piloté par l'oscillateur de référence 102 et destiné à générer une porteuse,
- un étage 122 de modulation de la porteuse issue du synthétiseur 121 à l'aide du signal provenant du second mélangeur 116,
- un amplificateur de puissance 123 relié à la sortie de l'étage 122, et
- une antenne de sortie 124 reliée à l'amplificateur 123.

De préférence le second et le troisième synthétiseurs peuvent l'objet d'une sélection de fréquence comme schématisé sur la figure 1, pour permettre d'adapter la fréquence de réémission.

Les moyens équipant les stations au sol sont conçus pour recevoir les signaux réémis par les translateurs embarqués, et après récupération des signaux correspondant aux différents satellites, et comparaison de phases entre ceux-ci, définir des pseudodistances permettant de localiser la position du mobile concerné.

Les moyens de traitement équipant chaque station au sol peuvent également faire l'objet de nombreux modes de réalisation.

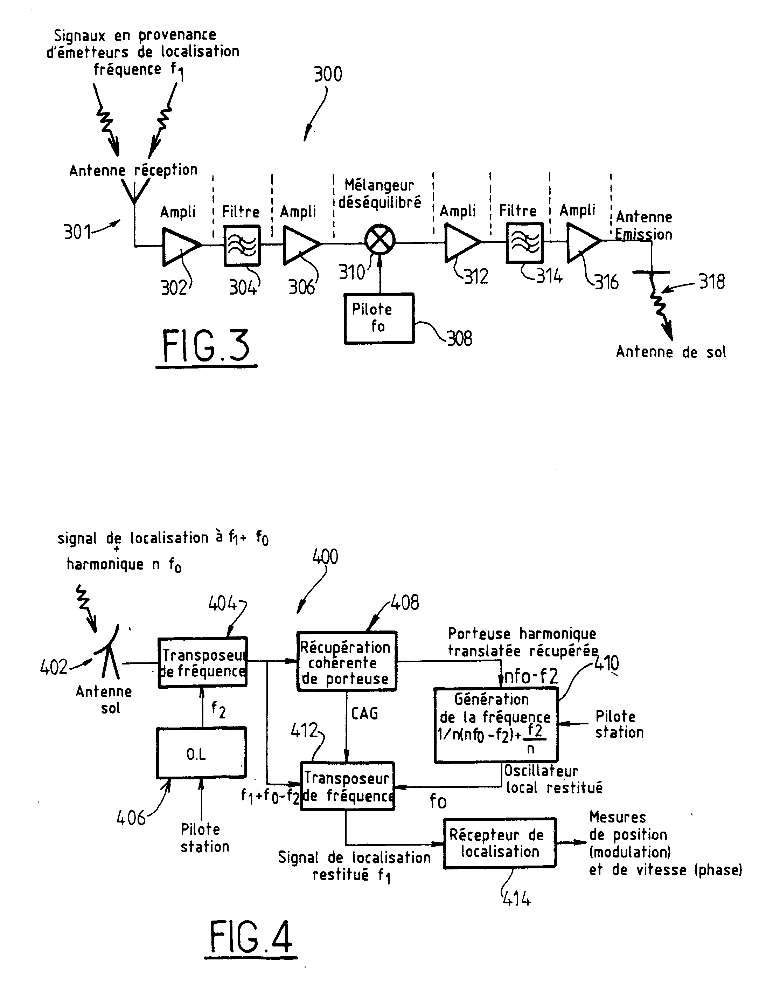

Selon le mode de réalisation représenté sur la figure 2, ces moyens de traitement 200 comprennent :
- une antenne de réception 202 et
- deux voies symétriques 210, 230 comprenant chacune, de façon typique :
   . un amplificateur d'entrée 211, 231,
   . un premier mélangeur 212, 232,
   . un premier filtre de fréquence intermédiaire 213,233,
   . un second mélangeur 214, 234,
   . un second filtre de fréquence intermédiaire 215, 235,
   . un troisième mélangeur 216, 236 et
   . une boucle à verrouillage de phases 217, 237,
- un premier synthétiseur 240 pilotant les premiers mélangeurs 212, 232,
- un second synthétiseur 242 pilotant les seconds mélangeurs 214, 234,
- un module de sortie 244,
- un étage de traitement 246.

Les systèmes de radiolocalisation du type précité ont déjà rendu de grands services pour des programmes d'armement.

Toutefois, l'homme de l'art comprendra aisément à l'examen des figures 1 et 2 annexées, que ces systèmes sont généralement onéreux. Cela est fort gênant lorsqu'il s'agit de systèmes non récupérables, à usage civil.

Par ailleurs, les systèmes de radiolocalisation connus du type représenté sur les figures 1 et 2 sont d'un poids non négligeable, typiquement supérieur à 1 Kg et d'un volume important, typiquement supérieur à 0,5 l.

La présente invention a pour but principal de proposer un nouveau système permettant de réaliser des translateurs embarqués de faible coût, poids et volume, et des stations de traitement au sol simplifiées ne nécessitant pas l'emploi de récepteurs de localisation spéciaux.

Un autre but important de la présente invention est de proposer un système permettant de suivre des mobiles situés à une distance importante des stations au sol concernées.

Dans le cadre d'une mise en oeuvre non limitative, la présente invention trouve application dans le suivi de la trajectoire de plusieurs ballons pourvus de capteurs respectifs.

Selon la présente invention, les buts précités sont atteints grâce à un système de radiolocalisation comprenant des translateurs embarqués comprenant un étage de translation de fréquence piloté par un oscillateur local et des moyens conçus pour superposer au signal réémis par chaque translateur embarqué un harmonique n de l'oscillateur local utilisé.

Selon une autre caractéristique avantageuse de la présente invention, le système de radiolocalisation conforme à la présente invention comprend au niveau d'au moins une station au sol un récepteur cohérent apte à récupérer la phase de la porteuse harmonique et un étage apte à soustraire cette porteuse harmonique des signaux de localisation translatés reçus en provenance des translateurs embarqués.

Selon une autre caractéristique avantageuse de la présente invention, le récepteur cohérent fournit une évaluation de l'atténuation de propagation et contrôle un transposeur de fréquence intégré à la station au sol afin de compenser la gamme dynamique de la réception des signaux translatés.

D'autres caractéristiques, buts et avantages de la présente invention apparaîtront à la lecture de la description détaillée qui va suivre et en regard des dessins annexés donnés à titre d'exemple non limitatif et sur lesquels :
- la figure 1 précédemment décrite représente sous forme de blocs fonctionnels la structure d'un translateur de fréquence embarqué conforme à l'état de la technique,
- la figure 2 précédemment décrite représente sous forme de blocs fonctionnels la structure de moyens de traitement intégrés dans une station au sol, conformes à l'état de la technique,
- la figure 3 représente sous forme de blocs fonctionnels la structure d'un translateur de fréquence embarqué conforme à la présente invention, et
- la figure 4 représente sous forme de blocs fonctionnels la structure de moyens de traitement intégrés dans une station au sol, conformes à la présente invention.

On va tout d'abord décrire la structure du translateur de fréquence 300 conforme à la présente invention représentée sur la figure 3.

Ce translateur 300 comprend : une antenne de réception 301, un premier étage amplificateur 302, un filtre 304, un second amplificateur 306, un oscillateur local pilote 308, un mélangeur 310, un troisième amplificateur 312, un second filtre 314, un quatrième amplificateur 316, et une antenne d'émission 318.

L'antenne de réception 301 est adaptée pour recevoir les signaux en provenance des différents émetteurs de localisation, généralement les satellites, à une fréquence f1.De préférence, l'antenne 301 reçoit ainsi les signaux issus de quatre émetteurs synchronisés non coplanaires.Il peut s'agir de satellites comme indiqué précedemment ou encore d'émetteurs de localisation disposés au sol. On rappelle que ces émetteurs émettent au même moment des signaux horloges synchrones de même fréquence et même largeur de bande en des points précis de l'espace.

Les signaux reçus sur l'antenne de réception 301 sont appliqués au premier amplificateur 302, et de là par l'intermédiaire du premier filtre 304 au second amplificateur 306.

Le mélangeur 310 reçoit d'une part, les signaux issus du second amplificateur 306, d'autre part un signal de fréquence f0 issu de l'oscillateur 308. Le signal de sortie issu du mélangeur 310 comprend ainsi une fréquence intermédiaire f1 + f0 ou f1-f0. On s'attachera à décrire seulement la première solution dans la suite de l'exposé : f0 positif ou négatif.

En outre, selon une caractéristique importante de l'invention, le mélangeur 310 est un mélangeur déséquilibré afin de générer en sortie un harmonique n de l'oscillateur local 308, soit n f0 cet harmonique.

Le signal issu du mélangeur déséquilibré 310 comprend ainsi un signal de localisation translaté en fréquence f1 + f0 auquel est superposé l'harmonique n f0.

Le mélangeur déséquilibré 310 peut être formé de toute structure connue de l'homme de l'art. Le mélangeur 310 peut être formé par exemple d'un mélangeur à une diode (cas n impair) ou deux diodes (cas n pair), d'un mélangeur à transistors bipolaires, d'un mélangeur à transistors à effet de champ ou encore d'un mélangeur paramétrique. Toutes ces dispositions connues de l'homme de l'art ne seront pas décrites par la suite et résultent de compromis adaptés à chaque cas : stabilité pilote, valeur de n, niveau de l'harmonique f0 par rapport au signal translaté.

Pour obtenir l'harmonique n f0 en sortie, une façon simple de déséquilibrer le mélangeur consiste à utiliser des diodes non appairées, dans le cas d'un mélangeur double symétrique à diodes.

Le signal issu du mélangeur déséquilibré 310 est appliqué successivement à l'amplificateur 312, au filtre 314 et à l'amplificateur 316 avant d'atteindre l'antenne d'émission 318.

On va maintenant décrire la structure des moyens de traitement 400 intégrés dans une station au sol.

Ces moyens 400 comprennent une antenne de réception 402, un transposeur de fréquence 404, un oscillateur local 406, un module de récupération cohérente de porteuse 408, un étage 410 de traitement de la porteuse harmonique, un second étage transposeur de fréquence 412 et un étage de sortie 414.

L'antenne 402 placée au sol est conçue pour recevoir le signal composite comprenant le signal de localisation f1 + f0 auquel est superposé l'harmonique n f0. Elle est de préférence directive afin de favoriser le bilan de liaison et de se prévenir contre des multitrajets néfastes.

Ce signal composite est appliqué au transposeur de fréquence 404. Celui-ci reçoit par ailleurs le signal de fréquence f2 issu de l'oscillateur local 406. Cet oscillateur local 406 est verrouillé en phase sur un pilote de fréquence de la station, par exemple une horloge à quartz, ou de préférence une horloge au rubidium ou une horloge au césium. On récupère ainsi à la sortie du transposeur de fréquence 404 un signal composite comprenant, d'une part un signal de localisation objet d'une double translation de fréquence : f1 + f0 - f2, d'autre part une porteuse harmonique translatée n f0 - f2.

Ce signal composite est appliqué au module 408 ainsi qu'au transposeur de fréquence 412.

Le module 408 est conçu pour récupérer la porteuse harmonique translatée n f0 - f2. Pour cela, de façon connu en soi, le module 408 peut être formé d'un oscillateur commandé en tension asservi sur l'erreur de phase constatée entre le signal qu'il délivre et la porteuse nf0-f2 supposée seule dans une bande étroite.

La porteuse harmonique translatée n f0 - f2 récupérée à la sortie du module 408 est appliquée au module 410. Celui-ci reçoit par ailleurs la fréquence f2 de la station.

Le module 410 opère d'une part, une division par n de la porteuse harmonique translatée récupérée n f0 - f2, d'autre part une addition au signal ainsi obtenu de la fréquence f2/ n. On obtient ainsi à la sortie du module 410 un signal de fréquence 1/n (n f0 - f2) + f2/n, soit f0.

Le module 410 permet ainsi de récupérer la fréquence f0 pilote du translateur embarqué.

Cette fréquence f0 pilotée récupérée est appliquée au transposeur de fréquence 412. Celui-ci reçoit par ailleurs la fréquence pilote f2 de la station et le signal de localisation doublement translaté f1 + f0 - f2. Ainsi, le transposeur de fréquence 412 génère à sa sortie le signal de localisation restitué f1.

Ce signal de localisation restitué f1 est appliqué au module 414 formant récepteur de localisation.

Le récepteur cohérent 408 peut en outre être utilisé pour fournir une évaluation de l'atténuation de propagation, au niveau de sa sortie de commande automatique de gain. Cette estimation appliquée au transposeur 412 comme représenté sur la figure 4 permet alors de compenser la gamme dynamique de réception des signaux translatés compensant ainsi les pertes de propagation variables entre mobile et antennes. Cette disposition permet d'exploiter en fin de chaîne des récepteurs de navigation ou des instruments de mesure conventionnels (fréquence mètre intervallomètre, compteur ...) selon un procédé de mesure absolu ou différentiel.

A la sortie de cet élément, le signal recueilli est exactement celui qui a été recueilli à bord du mobile à un instant antérieur dépendant de son éloignement de la station.

Les différents signaux de localisation restitués issus du module 414 sont appliqués ensuite à un étage de traitement conçu pour mesurer, de façon connu en soi, la position du mobile et la vitesse de celui-ci, par mesures différentielles sur la base des différents signaux de localisation reçus. Tout ce passe en effet comme si le mobile embarquait lui-même le senseur de localisation.

Le pilote 308 de fréquence f0 embarqué sur mobile est une source de fréquence stable. Ainsi, le pilote 308 peut être utilisé pour découper l'émission du mobile et permettre de synchroniser les émissions de plusieurs mobiles exploitant la même bande de fréquence à l'émission, afin qu'une ou plusieurs stations puissent calculer leur position et leur vitesse séquentiellement dans le temps.

Dans le cas d'un procédé de mesure différentielle, un récepteur de référence évalue la phase de la porteuse et de la modulation reçue directement des quatre émetteurs. Ces phases sont ensuite soustraites de celles des signaux translatés afin d'extraire les coordonnées du mobile dans un repère géographique centré sur le récepteur de référence. Ce principe permet entre autre l'évaluation très précise de la vitesse sur un court laps de temps.

La présente invention trouve application dans la mesure différentielle de position et de vitesse de tout mobile susceptible de recevoir un translateur embarqué de ce type.

On notera, par comparaison avec l'état de la technique cité dans le préambule, que la présente invention permet de réaliser un translateur de fréquence embarqué de faible poids, typiquement inférieur à 500g et de faible volume (0,2 l). Par ailleurs, l'invention permet une réalisation à faible coût compte-tenu de la simplicité du système, la rendant propice à des applications où il n'est pas possible de récupérer le mobile.

La présente invention peut trouver tout particulièrement application dans le domaine de la trajectographie de ballons météorologiques ou le suivi d'animaux.

Bien entendu la présente invention n'est pas limitée aux modes de réalisation précédemment décrits mais s'étend à toutes variantes conformes à son esprit.

## Revendications

1. Système de radiolocalisation comprenant des translateurs (300) embarqués sur des mobiles et au moins une station au sol (400) conçue pour traiter les signaux translatés reçus en provenance des translateurs (300), caractérisé par le fait que les translateurs (300) comprennent un étage (310) de translation de fréquence piloté par un oscillateur local (308) et des moyens (310) conçus pour superposer au signal réémis par chaque translateur embarqué (310) un harmonique n de l'oscillateur local (308) utilisé.

2. Système de radiolocalisation selon la revendication 1, caractérisé par le fait qu'il comprend au niveau d'au moins une station au sol (400) un récepteur cohérent (408) apte à récupérer la phase de la porteuse harmonique et un étage (412) apte à soustraire cette porteuse harmonique des signaux de localisation translatée reçus en provenance des translateurs embarqués (300).

3. Système de radiolocalisation selon la revendication 2, caractérisé par le fait que le récepteur cohérent (408) fournit une évaluation de l'atténuation de propagation et contrôle un transposeur de fréquence (412) intégré à la station au sol (400) afin de compenser la gamme dynamique de la réception des signaux translatés.

4. Système de radiolocalisation selon la revendication 2 ou 3, caractérisé par le fait que le récepteur cohérent (408) est formé d'un oscillateur contrôlé en tension et asservi sur la porteuse pure translatée.

5. Système de radiolocalisation selon l'une des revendications 1 à 4, caractérisé par le fait que les moyens générant l'harmonique sont formés par un mélangeur déséquilibré (310).

6. Système de radiolocalisation selon l'une des revendications 1 à 5, caractérisé par le fait que les moyens générant l'harmonique sont constitués d'un montage passif à base d'au moins une diode.

7. Système de radiolocalisation selon l'une des revendications 1 à 6, caractérisé par le fait que chaque translateur embarqué comprend en cascade une antenne de réception (301), un premier amplificateur (302), un filtre (304), un second amplificateur (306), un mélangeur déséquilibré (310) recevant le signal issu du second amplificateur (306) et un signal issu d'un oscillateur pilote (308), un troisième amplificateur (312), un second filtre (314), un quatrième amplificateur (316) et une antenne d'émission (318).

8. Système de radiolocalisation selon l'une des revendications 1 à 7, caractérisé par le fait que les moyens de traitement de la station au sol (400) comprennent un premier transposeur de fréquence (404) qui reçoit d'une part, un signal composite en provenance d'un translateur embarqué (300) reçu sur une antenne (402) et d'autre part, un signal (f2) issu d'un oscillateur local (406) verrouillé par un signal pilote, un moyen de récupération cohérente de porteuse harmonique translatée (408), un module (410) de récupération de la fréquence pilote (f0) du translateur embarqué, un second transposeur de fréquence (412) qui reçoit à la fois le signal (f2) issu de l'oscillateur local (406), la porteuse harmonique et le signal issu du premier transposeur de fréquence (404).

9. Système de radiolocalisation selon la revendication 8, caractérisé par le fait qu'il comprend en outre un récepteur de localisation apte à traiter les signaux en sortie du second transposeur de fréquence (412).
